# EUROPÄISCHE PATENTSCHRIFT

(11) **EP 0 985 151 B1**
(45) Veröffentlichungstag und Bekanntmachung des Hinweises auf die Patenterteilung: **09.11.2005**
(21) Anmeldenummer: 99915655.7
(22) Anmeldetag: 18.03.1999
(51) Int. Cl.: G01P 15/10, G01C 19/56, G01N 27/00, G01L 9/00, G01L 1/10

(54) **MIKROSENSOR MIT EINER RESONATORSTRUKTUR**
MICROSENSOR WITH RESONATOR STRUCTURE
MICROCAPTEUR DOTE D'UNE STRUCTURE RESONNANTE

(30) Priorität: 24.03.1998 DE 19812773
(43) Veröffentlichungstag der Anmeldung: 15.03.2000
(73) Patentinhaber: Conti Temic microelectronic GmbH, 90411 Nürnberg (DE)
(72) Erfinder: SEIDEL, Helmut, D-82319 Starnberg (DE); AIKELE, Matthias, D-82008 Unterhaching (DE); PRECHTEL, Ulrich, D-81735 München (DE); NAGLER, Oliver, D-81673 München (DE); KÜHL, Karl, D-86916 Kaufering (DE)
(86) Internationale Anmeldenummer: PCT/EP1999/001793
(87) Internationale Veröffentlichungsnummer: WO 1999/049323

(56) Entgegenhaltungen:
- WO-A-89/10567
- WO-A-89/10568
- DE-A- 4 022 495
- DE-A- 19 528 961
- US-A- 5 367 217
- P.OHLCKERS ET AL.: "An Integrated Resonant Accelerometer Microsystem for Automotive Applications" TRANSDUCERS 97, 1997 INTRNATIONAL CONFERENCE ON SOLID STATE SENSORS, DIGEST OF TECHNICAL PAPERS (CAT. NO. 97TH8267),PROCEEDINGS OF INTERNATIONAL SOLID STATE SENSORS AND ACTUATORS CONFERENCE CHICAGO,IL,US, Bd. 2, 16. - 19. Juni 1997, Seiten 843-846, XP002110001 in der Anmeldung erwähnt

## Beschreibung

Die Erfindung betrifft einen Mikrosensor mit einer Resonatorstruktur, die durch erste elektrische Signale zu Schwingungen angeregt wird, und in Abhängigkeit von der Meßgröße zweite elektrische Signale abgibt; wobei zur thermischen Anregung von Schwingungen auf der Resonatorstruktur ein Heizelement angeordnet ist, dem mindestens eines der ersten elektrischen Signale zugeführt wird. Beispiele von thermisch angeregten Mikrosensoren sind in US-A-5 367 217, WO 89/10567 und DE-A-19 528 961 beschrieben.

Aus "An Integrated Resonant Accelerometer Microsystem for Automotive Applications", Transducers '97, Seiten 843-846, ist ein Beschleunigungssensor mit Resonator-Struktur bekannt, bei dem Schwingungen des Resonators thermisch angeregt werden. Bei diesem bekannten Beschleunigungssensor ist eine seismische Masse an zwei Armen im Zentrum einer Aussparung des Siliziumchips aufgehängt. Die beiden Arme verlaufen diagonal. Auf einem der beiden Arme ist ein Widerstand angeordnet, der mit einem gepulsten Strom versorgt wird. Aufgrund der zeitlich sich ändernden thermischen Verspannung, die aus den unterschiedlichen Temperaturen von Oberseite und Unterseite resultiert, wird die Struktur zu Schwingungen angeregt, die mittels einer äußeren Beschaltung auf eine Resonanzbedingung eingestellt wird. Eine Kraft auf die seismische Masse, z.B. aufgrund einer äußeren Beschleunigung senkrecht zur Oberfläche der Struktur, bewirkt eine Änderung der Resonanzfrequenz, die detektiert und ausgewertet wird.

Die thermische Anregung mittels Stromimpulse durch in die Oberfläche diffundierter Widerständer erzeugt Schwingungen, deren Schwingungsebene rechwinklig zur Resonatorstruktur liegen. Daraus resultieren eine Reihe von Nachteilen. Insbesondere ist die erzielbare Temperaturdifferenz zwischen Vorder- und Rückseite des beheizten Steges aufgrund der räumlichen Nähe und der schlechten thermischen Isolierung sehr gering. Deswegen wird eine relativ große Heizleistung benötigt. Ferner liegt die Empfindlichkeitsrichtung dieses Sensors senkrecht zu seiner Oberfläche. Das ist für eine Vielzahl von Anwendungen, insbesondere aber beim Einsatz als Beschleunigungssensor für Insassenschutzsysteme für Kraftfahrzeuge nicht erwünscht. Für lokal empfindliche Sensoren sind vertikal schwingende Resonatoren jedoch aus herstellungstechnischen Gründen wenig geeignet, da z.B. unterschiedliche Dicken für den Resonator und die seismische Masse.erforderlich sind.

Aufgabe der Erfindung ist es, einen Mikrosensor mit einer Resonatorstruktur anzugeben, bei dem eine laterale thermische Anregung der Schwingungen erfolgt.

Diese Aufgabe wird durch einen Mikrosensor mit einer Resonatorstruktur mit den Merkmalen des Anspruchs 1 gelöst. Die vorteilhafte Ausgestaltung des Mikrosensors erfolgt gemäß den Mermalen der abhängigen Ansprüche.

Bei einem Mikrosensor mit einer Resonatorstruktur, dessen Schwingungen thermisch angeregt werden, ist es vorgesehen, den Mikrosensor an einem Fußpunkt mindestens eines schwingenden Teils der Resonatorstruktur mit wenigstens zwei, durch eine Zone mit verminderter Wärmeleitung voneinander thermisch getrennte Bereiche zu versehen und das Heizelement auf einem der Bereiche anzuordnen. Durch diese Anordnung läßt sich die Resonatorstruktur zu lateralen Schwingungen anregen, wenn das Heizelement mit entsprechenden Stromimpulsen versorgt wird. Vorteilhaft ist es, wenn auf mindestens einem der anderen Bereiche ein Aufnahmeelement zur Detektion der Schwingungsamplitude angeordnet ist.

In einer vorteilhaften Ausgestaltung der Erfindung wird das Heizelement gleichzeitig zur Detektion der Schwingungsamplitude verwendet.

Eine erste Ausführungsform der Erfindung sieht vor, daß die Zone mit verminderter Wärmeleitung eine mechanische Aussparung beinhaltet, die zwischen den sich dadurch ergebenden zwei Bereichen eine erhöhte thermische Isolierung erzeugt.

Eine zweite Ausführungsform der Erfindung sieht vor, daß der schwingende Teil der Resonatorstruktur aus einem ein- oder mehrfach eingespannten Resonatorsteg besteht, der an seinem Fußpunkt in ein U-Profil übergeht, wobei auf dem ersten Schenkel des U-Profils das Heizelement und auf dem zweiten Schenkel des U-Profils das Aufnahmeelement angeordnet ist.

Zur sensierung der Meßgröße ist es vorteilhaft, wenn der Resonatorsteg an seinem dem U-Profil abgewandten Ende an einer sensorspezifischen Struktur eingespannt ist, die zu einer Verstimmung der Resonanzfrequenz führt. Bei Aufführung als Beschleunigungssensor ist das eine seismische Masse.

In einer weiteren Ausführungsform der Erfindung ist es vorgesehen, daß der schwingende Teil der Resonatorstruktur aus einer Stimmgabel besteht, bei der nahe dem Fußpunkt eine Aussparung angeordnet ist, die einen die zinken der Stimmgabel miteinander verbindenden Steg vom Fußpunkt der Stimmgabel thermisch isoliert. Dann ist das Heizelement vorteilhaft auf dem Steg angeordnet.

Die Resonatorstruktur besteht aus einem Halbleitermaterial, vorteilhaft aus monokristallinem Silizium. Das Heizelement ist als eine dotierte Widerstandszone im Silizium oder als Dünnfilmwiderstand auf der Oberfläche der Resonatorstruktur ausgestaltet

Das Aufnahmeelement zur Detektion der Schwingungsamplitude ist als Piezowiderstand ausgestaltet. Die Detektion der Schwingungsamplitude kann auch kapazitiv erfolgen

Kurze Beschreibung der Figuren:
- Figur 1: zeigt einen Beschleunigungssensor nach der Erfindung in Ansicht von oben.
- Figur 2: zeigt ein Detail des Beschleunigungssensors der Figur 1.
- Figur 3: zeigt ein weiteres Detail des Beschleunigungsensors der Figur 1.
- Figur 4: zeigt einen Stimmgabel - Resonator nach der Erfindung.
- Figur 5: zeigt den Beschleunigungsensor der Figur 1 in perspektivischer Darstellung.
- Figur 6: den Detailausschnitt der Figur 2 in perspektivischer Darstellung.
- Figur 7: den Detailausschnitt der Figur 3 In perspektivischer Darstellung.

Die Erfindung betrifft die Grundstruktur von mikromechanisch hergestellten, thermisch aktivierten Resonatoren mit (bezüglich der Chipebene) lateraler Schwingrichtung. Der Erfindungsgedanke soll anhand eines Beschleunigungssensors mit resonanter Signalauslesung und lateraler Empfindlichkeitsrichtung erläutert werden. Dies ist jedoch nur als ein Ausführungsbeispiel gedacht und in keiner Weise darauf beschränkt. Andere Anwendungen sind in der Druck-, Kraft- und Drehratensensorik zu finden, ferner in der chemischen Sensorik, sowie für Frequenznormale und Filter.

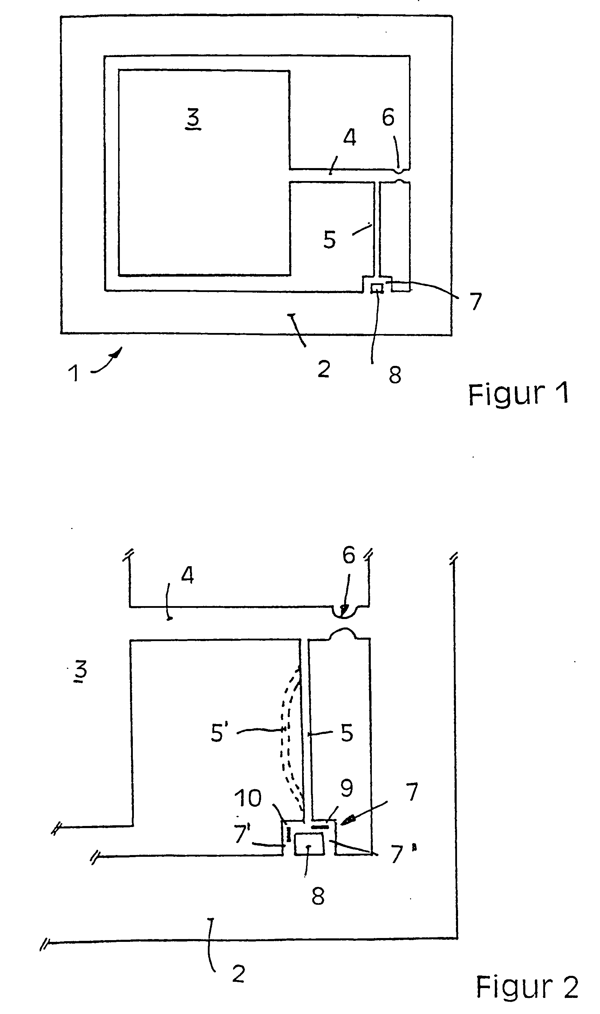

Die Grundstruktur des Resonators ist dadurch gekennzeichnet, daß in oder nahe dessen Fußpunkt eine mechanische Aussparung existiert, die zwischen den dadurch sich ergebenden zwei mechanischen Teilbereichen eine erhöhte thermische Isolierung erzeugt. Figur 1 zeigt einen derartigen mikromechanischen Beschleunigungsensor, insbesondere dessen Resonatorstruktur, in Ansicht von oben. Der Sensor 1 besteht im wesentlichen aus einem Chip - Rahmen 2 und einer im Chip - Rahmen schwingfähig gelagerten seismischen Masse 3, die über ein Hebelwerk 4 auf den schwingenden Teil der Resonatorstruktur, den Resonatorsteg 5 einwirkt. Da das Hebelwerk im vorliegenden Ausführungsbeispiel gleichzeitig das Lager für die seismischen Masse darstellt, ist an dem Ende, das dem Chip - Rahmen zugewandt ist, ein Kerblager 6 im Hebel angeordnet. Am Fußpunkt des Resonatorstegs, also dort wo der Resonatorsteg mit dem Chip - Rahmen verbunden ist, ist ein U-Profil angeordnet. Dabei sind dessen beiden Schenkel (7',7") mit dem Chip - Rahmen und der Resonatorsteg mit der Mitte des Querholm verbunden.

Im konkreten Fall des Beschleunigungssensors sind die beiden Schenkel durch die Aussparung 8 des U-Profils zwei voneinander thermisch getrennte Bereiche. Die Aussparung 8 bildet eine Zone mit einer verminderter Wärmeleitung.

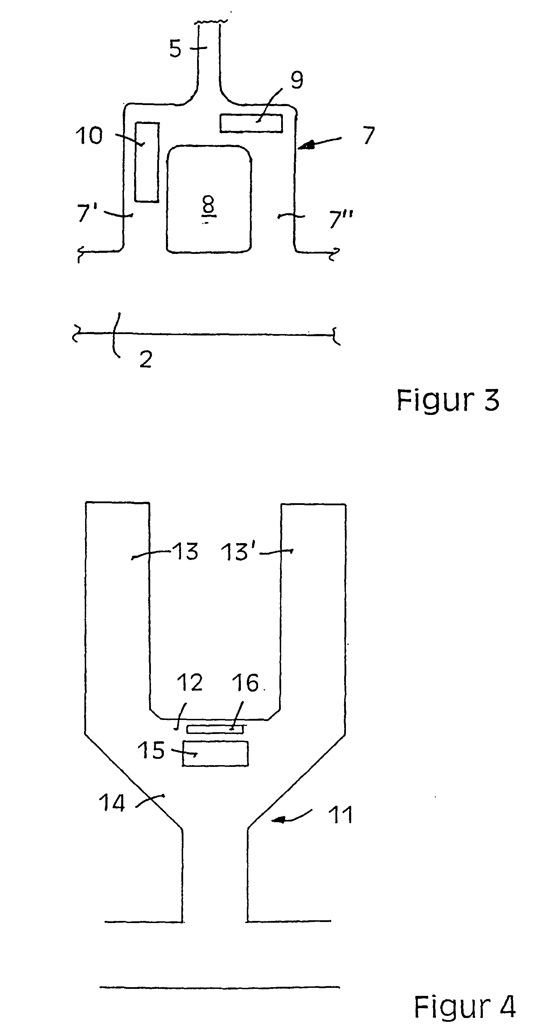

Figur 2 zeigt diesen Teil der Resonatorstruktur in Detail. Auf einer der beiden Bereiche ist als Heizelement ein Widerstand 10 und auf dem anderen Bereich ein Aufnahmeelement (9) zur Detektion der Schwingungsamplitude aufgebracht. Im vorliegenden Ausführungsbeispiel ist das Aufnahmeelement ein Piezowiderstand. Auch andere, beispielsweise kapazitive Aufnahmeelemente lassen sich hierfür vorteilhaft verwenden. Die Schwingungsebene des Resonatorstegs 5 liegt in der Ebene der Resonatorstuktur und ist in der Figur 2 durch die gestrichelten Linien dargestellte Auslenkposition 5' des Resonatorstegs angedeutet. Wird nun das Heizelement 10 durch einen gepulsten Strom periodisch anregt, so führt das zu einer thermischen Deformation dieses Schenkels im Takt der Anregung. Gleichzeitig wird der Resonatorsteg zum Schwingen angeregt. Die Figur 3 zeigt das U-Profil 7 in nochmals vergrößerter Darstellung.

Eine weitere Möglichkeit besteht darin, auf beiden Teilstrukturen jeweils ein Heizelement aufzubringen und beide im Gegentakt zueinander zu aktivieren. Die Aufnahmeelemente müssen dann entsprechend umplaziert werden.

Der Heizwiderstand 10 wird im einfachsten Fall durch eine umdotierte Zone im Halbleitermaterial der Resonatorstruktur realisiert. Dies hat den vorteil der sehr einfachen Herstellung sowie den weiteren Vorteil, daß keine unnötigen Temperaturdriften (z.B. wie bei Bimetallen) induziert werden. Es ist aber auch möglich, einen Dünnfilm-Heizwiderstand an der entsprechenden Stelle auf die Resonatorstruktur aufzubringen.

Die Amplitude der Schwingung kann im einfachsten Fall über einen Piezowiderstand als Aufnahmeelement 9 detektiert werden. Wirkt nun eine Beschleunigung auf die seismische Masse, so verändert sich aufgrund der Änderung der mechanischen verspannung des Resonatorstegs durch das Einwirken des Hebelwerks auch die Resonanzfrequenz des Resonatorstegs. Das Ausgangssignal des Mikrosensors ist die zur Beschleunigung proportionale Resonanzfrequenz, die mittels einer geeigneten elektronischen Schaltung bestimmt wird, die das Heizelement und das Aufnahmeelement umfaßt.

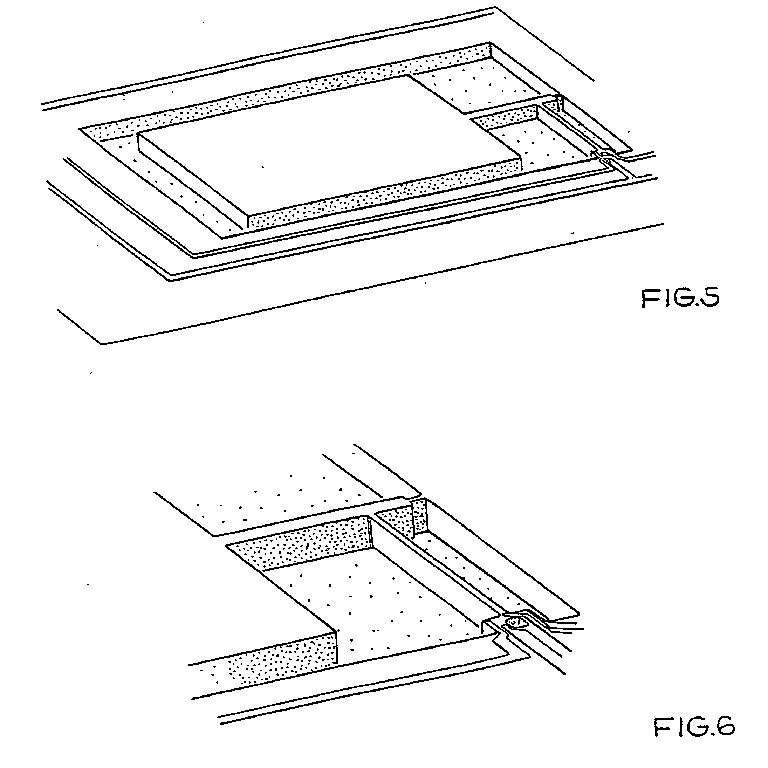

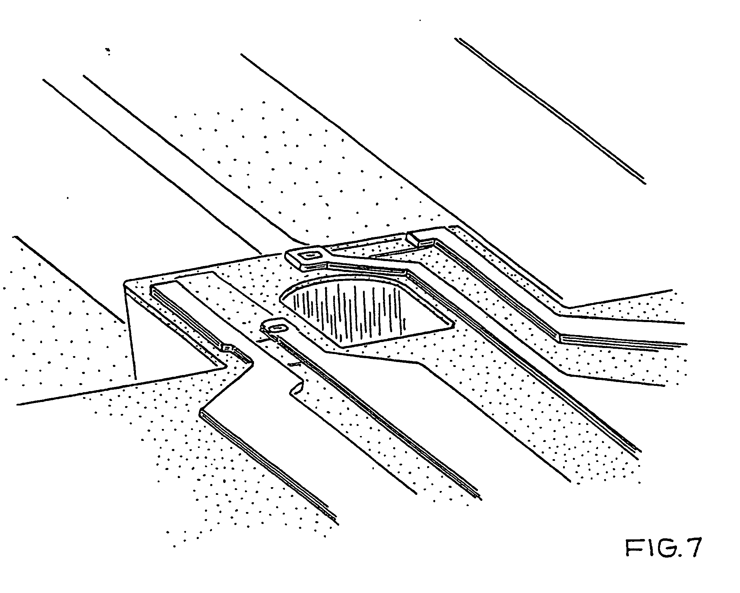

Die Figuren 5, 6 und 7 zeigen den Mikrosensor in den jeweiligen Detallansichten der Figuren 1, 2 und 3 nochmals in perspektivischer Darstellung. Dort sind auch die elektrischen Zuführungen für Heizelement und Aufnahmeelement dargestellt.

In Figur 4 ist als zweites Ausführungsbeispiel eine Stimmgabelstruktur zur Messung von Drehraten dargestellt. Dort wird ein mechanischer verbindungssteg 12 zwischen den zwei Zinken 13, 13' realisiert, der vom Fußpunkt 14 der stimmgabelzinken durch eine mechanische Aussparung 15 separiert ist. Auf diesem Verbindungssteg befindet sich der Heizwiderstand 16. Durch diese Geometrie wird der Gegentaktmodus der Stimmgabel angeregt, der für die Messung der Drehrate mittels der Coriolis-Kraft benötigt wird. Die Auslesung der Amplitude kann über in der Figur wegen der besseren Übersichtlichkeit nicht dargestellte Piezowiderstände oder über kapazitive Meßelektroden erfolgen. Der Fachmann wird diese bei Bedarf nach den an den Sensor gestellten Anforderungen ausgestalten und entsprechend auf der Oberfläche plazieren

Ein weiteres Beispiel ist ein Drucksensor für sehr niedrige Drücke (<10 mbar), insbesondere in der Vakuumtechnik. Dazu kann ein einfacher Resonatorsteg verwendet werden. Meßgröße ist die Resonanzüberhöhung bzw. Güte der Resonanzfrequenz, die sehr stark vom Umgebungsdruck abhängt. Durch eine entsprechende Wahl der schwingenden Massen bzw. der Querschnittsflächen kann der Sensor an den gewünschten Druckbereich adaptiert werden.

Noch ein Ausführungsbeispiel ist ein einfaches Frequenznormal für mikroelektronische Schaltungen, entsprechend einem Schwingquarz. Die Resonatorstruktur kann ohne weiters im Bereich einiger 100 kHz bis in den MHz Bereich hinein betrieben werden. Aufgrund der einfachen Bauweise besteht die Möglichkeit, den Resonator auf einem IC direkt zu integrieren und damit die Notwendigkeit von Schwingquarzen zu umgehen.

## Patentansprüche

1. Mikrosensor mit einer Resonatorstruktur (1;11), die durch erste elektrische Signale mittels eines Heizelementes (10,16) zu Schwingungen angeregt wird, und in Abhängigkeit von der Amplitude der Schwingungen zweite elektrische Signale abgibt; wobei zur thermischen Anregung von Schwingungen auf der Resonatorstruktur (1;11) das Heizelement (10;16) angeordnet ist, dem mindestens eines der ersten elektrischen Signale zugeführt wird,
**dadurch gekennzeichnet,**
• **daß** der Mikrosensor an einem Fußpunkt (7;14), d.h. einem Verbindungspunkt mit einem Chip-Rahmen (2), mindestens eines schwingfähigen Teils (5:13,13') der Resonatorstruktur wenigstens zwei, durch eine Zone mit verminderter wärmeleitung (8;15) voneinander thermisch getrennte Bereiche (7',7"; 12,14) aufweist,
• **daß** das Heizelement (10;16) auf einer der Bereiche angeordnet ist und so die Resonatorstruktur bezüglich der Ebene des Chip-Rahmens (2) zu lateralen Schwingungen anregt,
wobei auf mindestens einem der anderen Bereiche ein Aufnahmeelement (9) zur Detektion der Schwingungsamplitude angeordnet ist.

2. Mikrosensor mit einer Resonatorstruktur nach Anspruch 1, **dadurch gekennzeichnet, daß** das Heizelement (10,16) gleichzeitig zur Detektion der Schwingungsamplitude ausgebildet ist.

3. Mikrosensor mit einer Resonatorstruktur nach einem der Ansprüche 1 oder 2, **dadurch gekennzeichnet, daß** die Zone mit verminderter wärmeleitung (8;15) eine mechanische Aussparung beinhaltet, die zwischen den sich **dadurch** ergebenden zwei Bereichen eine erhöhte thermische Isolierung erzeugt.

4. Mikrosensor mit einer Resonatorstruktur nach einem der Ansprüche 1 - 3, **dadurch gekennzeichnet, daß** die Resonatorstruktur (1;11) aus einkristallinem Silizium besteht und das Heizelement (10;16) als eine dotierte widerstandszone im Silizium ausgestaltet ist.

5. Mikrosensor mit einer Resonatorstruktur nach einem der Ansprüche 1 - 3, **dadurch gekennzeichnet, daß** das Heizelement (10;16) als Dünnfilmwiderstand auf der Oberfläche der Resonatorstruktur ausgestaltet ist.

6. Mikrosensor mit einer Resonatorstruktur nach einem der Ansprüche 1 - 5, **dadurch gekennzeichnet, daß** mindestens ein schwingfähiger Teil der Resonatorstruktur aus einem ein- oder mehrfach eingespannten Resonatorsteg (5) besteht, der an seinem Fußpunkt in ein u-Profil (7) übergeht, wobei auf dem ersten Schenkel (7') des U-Profils das Heizelement (10) und auf dem zweiten Schenkel (7") des U-Profils das Aufnahmeelement (9) angeordnet ist.

7. Mikrosensor mit einer Resonatorstruktur nach Anspruch 6 **dadurch gekennzeichnet, daß** der Resonatorsteg (5) an seinem dem U-Profil (7) abgewandten Ende an einer Struktur zu einer Verstimmung der Resonanzfrequenz eingespannt ist.

8. Mikrosensor mit einer Resonatorstruktur nach Anspruch 7, **dadurch gekennzeichnet, daß** die Struktur zur Verstimmung der Resonanzfrequenz eine seismische Masse (3) ist.

9. Mikrosensor mit einer Resonatorstruktur nach einem der Ansprüche 1 - 5, **dadurch gekennzeichnet, daß** der schwingende Teil der Resonatorstruktur aus einer Stimmgabel (11) besteht bei der nahe dem Fußpunkt (14) der Zinken (13,13') eine Aussparung (15) zur thermischen Isolation eines die Zinken (13, 13') der Stimmgabel miteinander verbindenden Steges (12) vom Fußpunkt (14) angeordnet ist.

10. Mikrosensor mit einer Resonatorstruktur nach Anspruch 9, **dadurch gekennzeichnet, daß** das Heizelement (16) auf dem Steg (12) angeordnet ist.

11. Mikrosensor mit einer Resonatorstruktur nach einem der Ansprüche 1 - 10, **dadurch gekennzeichnet, daß** die Resonatorstruktur (1, 11) aus monokristallinem Silizium besteht.

12. Mikrosensor mit einer Resonatorstruktur nach einem der Ansprüche 1 - 11, **dadurch gekennzeichnet, daß** das Aufnahmeelement (9) zur Detektion der Schwingungsamplitude als Piezowiderstand ausgestaltet ist.

13. Mikrosensor mit einer Resonatorstruktur nach einem der Ansprüche 1 - 11, **dadurch gekennzeichnet, daß** zur Detektion der Schwingungsamplitude ein kapazitives Aufnahmeelement vorgesehen ist.

## Claims

1. Microsensor with a resonator structure (1; 11), said resonator structure (1; 11) being excited to vibrate by first electrical signals by means of a heating element (10; 16) and outputting second electrical signals depending on the amplitude of the vibrations, wherein the heating element (10; 16) is arranged on the resonator structure (1; 11) for the purpose of thermal excitation of vibrations, said heating element (10; 16) being supplied with at least one of the first electrical signals,
**characterized in**
- **that** the microsensor comprises at least two regions (7', 7"; 12, 14) arranged at a low end (7; 14) - i.e. at a junction with a chip frame (2) - of at least one vibratory part (5; 13, 13') of the resonator structure, said regions (7', 7"; 12, 14) being thermally separated from each other by a zone of reduced thermal conduction (8; 15);
- **that** the heating element (10; 16) is arranged in one of the regions and thus excites the resonator structure to vibrate laterally with reference to the plane of the chip frame (2),
wherein a transducing element (9) for detecting the vibration amplitude is arranged in at least one of the other regions.

2. Microsensor with a resonator structure according to claim 1, **characterized in that** the heating element (10; 16) is also configured for detecting the vibration amplitude.

3. Microsensor with a resonator structure according to any one of claims 1 or 2, **characterized in that** the zone of reduced thermal conduction (8; 15) includes a mechanical recess increasing thermal insulation between the two regions that are provided on account of the existence of said recess.

4. Microsensor with a resonator structure according to any one of claims 1 to 3, **characterized in that** the resonator structure (1; 11) consists of single-crystal silicon and the heating element (10; 16) is configured as a doped resistance zone in the silicon.

5. Microsensor with a resonator structure according to any one of claims 1 to 3, **characterized in that** the heating element (10; 16) is configured as a thin-film resistor on the surface of the resonator structure.

6. Microsensor with a resonator structure according to any one of claims 1 to 5, **characterized in that** at least one vibratory part of the resonator structure consists of a singly or multiply clamped resonator web (5) that passes into a U-beam (7) at its low end, wherein the heating element (10) is arranged on the first limb (7') of the U-beam and the transducing element (9) is arranged on the second limb (7") of the U-beam.

7. Microsensor with a resonator structure according to claim 6, **characterized in that** the resonator web (5), at that of its ends which does not pass into the U-beam (7), is clamped to a structure for detuning the resonant frequency.

8. Microsensor with a resonator structure according to claim 7, **characterized in that** the structure for detuning the resonant frequency is a seismic mass (3).

9. Microsensor with a resonator structure according to any one of claims 1 to 5, **characterized in that** the vibrating part of the resonator structure consists of a tuning fork (11) on which a recess (15) is arranged near the low end (14) of the prongs (13, 13'), said recess (15) thermally insulating a web (12) from the low end (14), said web (12) interconnecting the prongs (13, 13') of the tuning fork.

10. Microsensor with a resonator structure according to claim 9, **characterized in that** the heating element (16) is arranged on the web (12).

11. Microsensor with a resonator structure according to any one of claims 1 to 10, **characterized in that** the resonator structure (1; 11) consists of single-crystal silicon.

12. Microsensor with a resonator structure according to any one of claims 1 to 11, **characterized in that** the transducing element (9) for detecting the vibration amplitude is configured as a piezoelectric resistor.

13. Microsensor with a resonator structure according to any one of claims 1 to 11, **characterized in that** a capacitive transducing element is provided for detecting the vibration amplitude.

## Revendications

1. Microcapteur avec une structure de résonateur (1 ; 11) qui est excité en oscillations par des premiers signaux au moyen d'un élément chauffant (10 ; 16) et qui délivre des deuxièmes signaux en fonction de l'amplitude des oscillations ; l'élément chauffant (10; 16) étant disposé sur la structure de résonateur (1 ; 11) pour l'excitation thermique d'oscillations, élément chauffant auquel est conduit au moins un des premiers signaux électriques,
**caractérisé en ce que**
- le microcapteur présente, sur une base (7 ; 14), c'est-à-dire sur un point de raccordement avec un cadre de puce (2), d'au moins une partie pouvant osciller (5 ; 13, 13') de la structure de résonateur, au moins deux secteurs (7', 7" ; 12, 14) séparés thermiquement l'un de l'autre par une zone de conduction thermique amoindrie (8 ; 15),
- l'élément chauffant (10 ; 16) est disposé sur un des secteurs et excite ainsi la structure de résonateur en oscillations latérales par rapport au plan du cadre de puce (2),
un élément d'enregistrement (9) pour la détection de l'amplitude d'oscillation étant disposé sur au moins un des autres secteurs.

2. Microcapteur avec une structure de résonateur selon la revendication 1, **caractérisé en ce que** l'élément chauffant (10 ; 16) est réalisé simultanément pour la détection de l'amplitude d'oscillation.

3. Microcapteur avec une structure de résonateur selon une des revendications 1 ou 2, **caractérisé en ce que** la zone de conduction thermique amoindrie (8 ; 15) contient un évidement mécanique qui produit une isolation thermique accrue entre les deux secteurs qui en résultent.

4. Microcapteur avec une structure de résonateur selon une des revendications 1 à 3, **caractérisé en ce que** la structure de résonateur (1 ; 11) est constituée de silicium monocristallin et **en ce que** l'élément chauffant (10 ; 16) est exécuté en tant que zone de résistance dopée dans le silicium.

5. Microcapteur avec une structure de résonateur selon une des revendications 1 à 3, **caractérisé en ce que** l'élément chauffant (10 ; 16) est exécuté en tant que résistance à couche mince sur la surface de la structure de résonateur.

6. Microcapteur avec une structure de résonateur selon une des revendications 1 à 5, **caractérisé en ce que** au moins une partie pouvant osciller de la structure de résonateur est constituée d'une entretoise de résonateur (5) à serrage unique ou multiple qui au niveau de sa base se transforme en un profilé en U (7), l'élément chauffant (10) étant disposé sur la première branche (7') du profilé en U et l'élément d'enregistrement (9) étant disposé sur la deuxième branche (7") du profilé en U.

7. Microcapteur avec une structure de résonateur selon la revendication 6, **caractérisé en ce que** l'entretoise de résonateur (5), au niveau de son extrémité éloignée du profilé en U (7), est serrée sur une structure de désaccord de la fréquence de résonance.

8. Microcapteur avec une structure de résonateur selon la revendication 7, **caractérisé en ce que** la structure de désaccord de la fréquence de résonance est une masse sismique (3).

9. Microcapteur avec une structure de résonateur selon une des revendications 1 à 5, **caractérisé en ce que** la partie oscillante de la structure de résonateur est constituée d'un diapason (11) dans lequel, à proximité de la base (14) des pointes (13, 13'), est disposé un évidement pour l'isolation thermique vis-à-vis de la base (14) d'une entretoise (12) raccordant l'une à l'autre les pointes (13, 13') du diapason.

10. Microcapteur avec une structure de résonateur selon la revendication 9, **caractérisé en ce que** l'élément chauffant (16) est disposé sur l'entretoise (12).

11. Microcapteur avec une structure de résonateur selon une des revendications 1 à 10, **caractérisé en ce que** la structure de résonateur (1, 11) est constituée de silicium monocristallin.

12. Microcapteur avec une structure de résonateur selon une des revendications 1 à 11, **caractérisé en ce que** l'élément d'enregistrement (9) pour la détection de l'amplitude d'oscillation est configuré en tant que piézo-résistance.

13. Microcapteur avec une structure de résonateur selon une des revendications 1 à 11, **caractérisé en ce qu'**un élément d'enregistrement capacitif est prévu pour la détection de l'amplitude d'oscillation.
